# EUROPÄISCHE PATENTANMELDUNG

(11) **EP 3 309 499 A1**
(43) Veröffentlichungstag der Anmeldung: **18.04.2018**
(21) Anmeldenummer: 17189541.0
(22) Anmeldetag: 06.09.2017
(51) Int. Cl.: F41G 3/02, F41G 3/04, F41G 9/00

(54) **SYSTEM UND VERFAHREN ZUR WAFFENSYSTEMAUSWAHL**

(30) Priorität: 11.10.2016 DE 102016219690
(71) Anmelder: MBDA Deutschland GmbH, 86529 Schrobenhausen (DE)
(72) Erfinder: Gilch, Joachim, 82178 Puchheim (DE); Müller, Jörg, 85276 Pfaffenhofen (DE)
(74) Vertreter: Isarpatent

(57) **Zusammenfassung**

Ein Verfahren zur Waffensystemauswahl umfasst die Schritte des Erzeugens einer bildlichen Darstellung eines Ziels bzw. Zielgebietes für ein Waffensystem, des Auswählens eines Waffensystems auf der Basis eines oder mehrerer Waffensystemparameter, die bekannte, geschätzten und/oder vorausberechneten Eigenschaften des ausgewählten Waffensystems angeben, des Erzeugens graphischer Symbolelemente der Waffensystemparameter des ausgewählten Waffensystems, des Überlagerns der graphischen Symbolelemente über die bildliche Darstellung des Ziels bzw. Zielgebietes, des Änderns von Werten eines oder mehrerer der Waffensystemparameter durch einen Nutzer, des Modifizierens der graphischen Symbolelemente auf der Basis der geänderten Werten eines oder mehrerer der Waffensystemparameter, und des Modifizierens der Überlagerung der graphischen Symbolelemente über die bildliche Darstellung des Ziels bzw. Zielgebietes.

## Beschreibung

### TECHNISCHES GEBIET DER ERFINDUNG

Die Erfindung betrifft ein System zur Unterstützung eines Nutzers in der Waffensystemauswahl, sowie ein Verfahren zur Waffensystemauswahl, insbesondere im Rahmen der strategischen Missionsplanung bei der Munitions-und Gefechtskopfbestückung.

### TECHNISCHER HINTERGRUND

Der Einsatz eines Waffensystems erfordert eine präzise Wirkung im Ziel unter gleichzeitiger Vermeidung von Kollateralschäden im Zielgebiet bzw. der Zielumgebung. Im Rahmen einer strategischen oder taktischen Einsatzplanung kann zwischen verschiedenen Waffensystemen ausgewählt werden, insbesondere hinsichtlich Gefechtskopftyp, Munitionseinsatz und Sollflugprofil von Gefechtskörpern.

Die Druckschrift US 3,558,865 A beschreibt ein System zur Anzeige simulierter Nachdetonations-"Effekte" nach nuklearen Detonationen in einem Zielgebiet. Die Druckschrift US 6,961,070 B1 beschreibt ein Verfahren zur Anreicherung von Bilddaten eines Zielgebietes durch graphische Darstellungen einer vorhergesagten oder vorab berechneten Waffensystemeffektivität.

### ZUSAMMENFASSUNG DER ERFINDUNG

Eine der Aufgaben der Erfindung besteht daher darin, effizientere Lösungen für die Auswahl von Waffensystemen zu finden, insbesondere bei der strategischen oder taktischen Missionsplanung.

Diese und andere Aufgaben werden durch ein Verfahren zur Waffensystemauswahl mit den Merkmalen des Anspruchs 1, ein System zur Waffensystemauswahl mit den Merkmalen des Anspruchs 9 sowie ein nicht-flüchtiges computerlesbares Speichermedium mit den Merkmalen des Anspruchs 15 gelöst.

Gemäß einem ersten Aspekt der Erfindung umfasst ein Verfahren zur Waffensystemauswahl die Schritte des Erzeugens einer bildlichen Darstellung eines Ziels bzw. Zielgebietes für ein Waffensystem, des Auswählens eines Waffensystems auf der Basis eines oder mehrerer Waffensystemparameter, die bekannte, geschätzten und/oder vorausberechneten Eigenschaften des ausgewählten Waffensystems angeben, des Erzeugens graphischer Symbolelemente der Waffensystemparameter des ausgewählten Waffensystems, des Überlagerns der graphischen Symbolelemente über die bildliche Darstellung des Ziels bzw. Zielgebietes, des Änderns von Werten eines oder mehrerer der Waffensystemparameter durch einen Nutzer, des Modifizierens der graphischen Symbolelemente auf der Basis der geänderten Werten eines oder mehrerer der Waffensystemparameter, und des Modifizierens der Überlagerung der graphischen Symbolelemente über die bildliche Darstellung des Ziels bzw. Zielgebietes.

Gemäß einem zweiten Aspekt der Erfindung umfasst ein System zur Waffensystemauswahl eine Anzeigeeinrichtung, welche dazu ausgelegt ist, eine Zielanzeige mit der bildlichen Darstellung eines Ziels bzw. Zielgebietes für ein Waffensystem, welches auf der Basis eines oder mehrerer Waffensystemparameter, die bekannte, geschätzten und/oder vorausberechneten Eigenschaften des ausgewählten Waffensystems angeben, darzustellen. Das System umfasst weiterhin eine Recheneinrichtung, welche dazu ausgelegt ist, graphische Symbolelemente der Waffensystemparameter eines ausgewählten Waffensystems zu erzeugen, die graphischen Symbolelemente über die bildliche Darstellung des Ziels bzw. Zielgebietes zu überlagern, und auf der Basis von Nutzereingaben zur Änderung von Werten eines oder mehrerer der Waffensystemparameter die graphischen Symbolelemente auf der Basis der geänderten Werte eines oder mehrerer der Waffensystemparameter und deren Überlagerung über die bildliche Darstellung des Ziels bzw. Zielgebietes zu modifizieren.

Gemäß einem dritten Aspekt der Erfindung sind auf einem nicht-flüchtigen computerlesbaren Speichermedium computerausführbare Anweisungen gespeichert, die bei Ausführung mittels einer datenverarbeitenden Vorrichtung die datenverarbeitende Vorrichtung dazu veranlassen, die Schritte eines Verfahrens gemäß dem ersten Aspekt der vorliegenden Erfindung auszuführen.

Eine wesentliche Idee der Erfindung besteht darin, eine Vorgehensweise bei der effizienteren Auswahl von im Einsatz befindlicher Munition und der Berechnung des Munitionsprofils auf der Basis der Missionsplanung zu etablieren, mit Hilfe dessen die Waffensystemwirkung im Ziel optimiert sowie mögliche Kollateralschäden minimiert werden können. Dadurch wird es bereits vor Einsatz der Munition möglich, eine Bewertung der zu erwartenden Wirkung im Ziel und dessen Zielumgebung vorzunehmen und die Waffensystemauswahl unter Berücksichtigung dieser Bewertung zweckgerichtet zu treffen.

Hierzu werden geeignete Gefechtskopftechnologien einschließlich repräsentativer Gefechtskopfmodelle eingesetzt, mit Hilfe derer unter Berücksichtigung des geplanten Munitionsflugprofils eine Prognose des zu erwartenden Missionserfolges einschließlich der Gefahrenbereiche im Zielgebiet bzw. dessen Umgebung erstellt werden kann.

Vorteilhafte Ausgestaltungen und Weiterbildungen ergeben sich aus den weiteren Unteransprüchen sowie aus der Beschreibung unter Bezugnahme auf die Figuren.

Gemäß einiger Ausführungsformen des erfindungsgemäßen Verfahrens und des erfindungsgemäßen Systems können die Waffensystemparameter Gefechtskopftyp, Waffensystemreichweite, verfügbare Sensorik, Einsatzhöhen-Bänder, Gefechtskopfskalierung, Munitionszündzeitpunkt, Munitionswirkbereich, Flugkörperanflugwinkel, Flugkörperanfluggeschwindigkeit, Flugkörperauftreffgeschwindigkeit am Ziel, und/oder Munitionswirkpattern umfassen.

Gemäß einiger weiterer Ausführungsformen des erfindungsgemäßen Verfahrens und des erfindungsgemäßen Systems können die graphischen Symbolelemente computergestützt erzeugte Elemente wie Linien, Kreise, Pfeile oder Buchstaben aufweisen.

Gemäß einiger weiterer Ausführungsformen des erfindungsgemäßen Verfahrens und des erfindungsgemäßen Systems kann die bildliche Darstellung in Zoom, Ansichtswinkel, Ansichtsrichtung und/oder Positionierung des Ansichtsausschnitts durch einen Nutzer verändert werden.

Gemäß einiger weiterer Ausführungsformen des erfindungsgemäßen Verfahrens kann das Ändern von Werten eines oder mehrerer der Waffensystemparameter durch einen Nutzer gemäß vorab in einer Datenbank gespeicherten Parametereinstellungen für einen gewählten Waffensystemtyp erfolgen.

Gemäß einiger weiterer Ausführungsformen des erfindungsgemäßen Verfahrens und des erfindungsgemäßen Systems kann die bildliche Darstellung eine Photographie, ein Aufklärungsbild, ein Satellitenfoto, eine Wärmebildkameraaufnahme, eine Aufnahme eines Nachtsichtgerätes oder ein Ausschnitt kartographischen Bildmaterials umfassen.

Dabei kann die bildliche Darstellung in einigen Ausführungsvarianten ein zweidimensionales Bild oder ein dreidimensionales Bild in perspektivischer Ansicht oder Draufsicht umfassen.

Das erfindungsgemäße Verfahrens gemäß dem ersten Aspekt kann in einigen Ausführungsformen der Erfindung zur kombinierten Darstellung einer bildlichen Darstellung und graphischer Symbolelemente in einem Verfahren zur strategischen oder taktischen Missionsplanung eingesetzt werden, um einen Missionsplaner bei der Waffensystemauswahl zu unterstützen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

### KURZE INHALTSANGABE DER FIGUREN

Die vorliegende Erfindung wird nachfolgend anhand der in den schematischen Figuren angegebenen Ausführungsbeispiele näher erläutert. Es zeigen dabei:
Fig. 1 eine schematische Illustration der Anzeigeeinheit eines Systems zur Waffensystemauswahl gemäß einer Ausführungsform der Erfindung;
Fig. 2 ein Blockdiagramm eines Verfahrens zur additiven Fertigung von Bauteilen gemäß einer weiteren Ausführungsform der Erfindung; und
Fig. 3 eine schematische Illustration eines computerlesbaren Speichermediums gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt. Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugszeichen versehen.

### BESCHREIBUNG VON AUSFÜHRUNGSBEISPIELEN

Munition im Sinne der vorliegenden Erfindung umfasst jegliche Art von nicht fest mit einer Waffe oder einem Gefechtskopf verbundene, meist nachladbare Teile, welche die eigentlichen Wirkungsträger darstellen und die Wirkung zumeist erst in beträchtlicher Entfernung zur Waffe oder zum Gefechtskopf entfalten.

Gefechtsköpfe im Sinne der vorliegenden Erfindung umfassen jegliche Art von Teilen einer Explosionswaffe, deren explosive Wirkung erst im Ziel der Explosionswaffe erzielt wird bzw. werden soll. Gefechtsköpfe dienen dabei der unmittelbaren Bekämpfung gegnerischer Ziele.

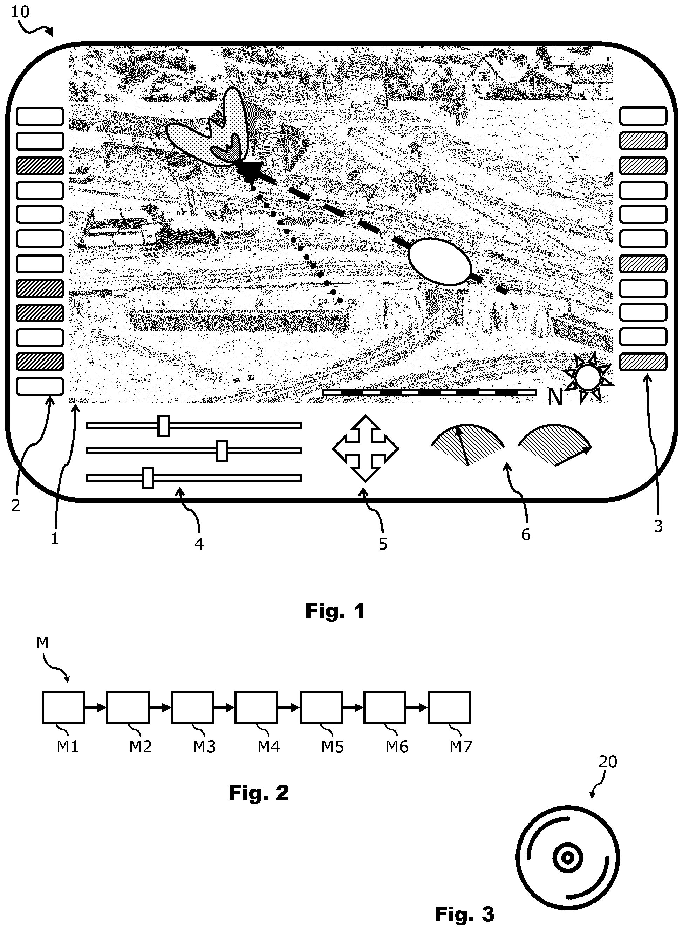

Fig. 1 zeigt eine schematische Illustration der Anzeigeeinrichtung 10 eines Systems zur Waffensystemauswahl bzw. zur Unterstützung eines Missionsplaners bei der Waffensystemauswahl, im Folgenden kurz Auswahlsystem genannt. Das Auswahlsystem kann beispielsweise eine Recheneinrichtung mit Anzeigeeinrichtung bzw. Display 10 sein, welches über geeignete Eingabe- und Ausgabeeinrichtungen wie etwa Tastatur, Maus oder geeignete andere über Schnittstellen mit der Recheneinrichtung gekoppelte elektronische Geräte angesteuert werden kann. Das Display 10 selbst kann beispielsweise ebenfalls eine Eingabefunktionalität aufweisen, beispielsweise im Sinne eines berührungsempfindlichen Bildschirms.

Das Display 10 kann eine Zielanzeige 1 umfassen, auf der eine bildliche Darstellung eines Ziels bzw. Zielgebietes für ein Waffensystem dargestellt werden kann. Die bildliche Darstellung kann dabei beispielsweise eine photographische, topographische, abstrahierte oder anderweitig graphisch verfremdete Abbildung (wie etwa eine Falschfarbendarstellung) des Ziels bzw. Zielgebietes sein. Zum Beispiel kann die bildliche Darstellung eine Photographie, ein Aufklärungsbild, ein Satellitenfoto, eine Wärmebildkameraaufnahme, eine Aufnahme eines Nachtsichtgerätes, ein Ausschnitt kartographischen Bildmaterials oder eine ähnliche Darstellung sein, auf der reale Objekte in räumlich korrektem Zusammenhang graphisch widergegeben werden. Die bildliche Darstellung kann ein zweidimensionales Bild oder ein dreidimensionales Bild in perspektivischer Ansicht oder Draufsicht sein.

Überlagert über die bildliche Darstellung sind graphische Symbolelemente wie Linien, Kreise, Pfeile, Buchstaben oder andere computergestützt erzeugte Elemente gezeigt, die gemäß bekannten, geschätzten und/oder vorausberechneten Eigenschaften eines gegenwärtig ausgewählten Waffensystems dargestellt werden. Beispielsweise können ein oder mehrere aus der folgenden Gruppe von Waffensystemparametern als Basis für die Erzeugung und Platzierung der graphischen Symbolelemente als überlagerte Informations-Metaebene über der bildlichen Darstellung dienen: Gefechtskopftyp, Waffensystemreichweite, verfügbare Sensorik, Einsatzhöhen-Bänder, Gefechtskopfskalierung, Munitionszündzeitpunkt, Munitionswirkbereich, Flugkörperanflugwinkel, Flugkörperanfluggeschwindigkeit, Flugkörperauftreffgeschwindigkeit am Ziel, Munitionswirkpattern.

Die Waffensystemparameter können über ein oder mehrere Auswahlregler 4 entsprechend eingestellt bzw. angepasst werden. Durch die virtuelle Variation der Waffensystemparameter kann eine Neuberechnung der graphischen Symbolelemente sowohl in Darstellungsgröße als auch in Darstellungsplatzierung erfolgen. Zur Auswahl der Zielanzeige 1 bzw. zur Modifikation der Anzeigeparameter wie etwa Zoom, Ansichtswinkel, Ansichtsrichtung oder Positionierung des Ansichtsausschnitts können bekannte Darstellungsmodifikatoren 5 und 6 vorgesehen werden, über die ein Nutzer die Ansicht auf der Zielanzeige 1 besser darstellbar machen kann.

Zur Auswahl von verschiedenen Waffensystemen, Gefechtsköpfen und/oder Munition können Auswahlbereiche 2 bzw. 3 vorgesehen sein, bei deren Auswahl ein ausgewähltes Waffensystem, ein ausgewählte Gefechtskopf und/oder ausgewählte Munition mit vorab in einer Datenbank gespeicherten Parametereinstellungen als Basis für die Berechnung der graphischen Symbolelemente dienen kann. Dabei können je nach geplanter Mission und/oder ausgewähltem Ziel bestimmte Waffensysteme, Gefechtsköpfe und/oder Munition gar nicht erst in der Auswahl zur Verfügung gestellt werden (dargestellt in Fig. 1 durch ausgegraute Auswahlbereiche 2 bzw. 3).

In der kombinierten Darstellung der bildlichen Darstellung und der graphischen Symbolelemente auf der Zielanzeige 1 können Wirkbereiche eines ausgewählten Waffensystems unter unterschiedlichen Anflugrichtungen (Variation des Azimut und/oder Elevationswinkels) visualisiert werden. Es wird dabei verdeutlicht, welchen Einfluss die Trajektorie des Waffensystems und damit die Trajektorie der Munition im Endanflug auf den Wirkbereich im Ziel haben. Im Rahmen der strategischen und/oder taktischen Missionsplanung besteht für einen Operator bzw. Nutzer des Systems zur Waffensystemauswahl in Fig. 1 die Möglichkeit, die Anflugrichtung im Ziel zu optimieren, so dass im Ziel der gewünschte Effekt unter Minimierung von Kollateralschäden im Zielgebiet erreicht werden kann.

Verfahren zur Waffensystemauswahl, die durch derartig visualisierte Entscheidungshilfen gestützt werden, eröffnen die Möglichkeit, das Wirkpattern einer gewählten Munition dem Zielszenario angepasst zu positionieren. Im Ergebnis kann das Waffensystem so gewählt werden, dass die optisch gestützte Auswahl eines Anflugvektors in Elevation und Azimut eine Planung der Anflugtrajektorie hinsichtlich Effektivität und Vermeidung von Kollateralschäden optimiert werden kann.

Fig. 2 zeigt ein Blockdiagramm eines schematischen Ablaufs eines Verfahrens M zur Waffensystemauswahl. Dabei kann das Verfahren M auf die Infrastruktur des Auswahlsystems zurückgreifen, wie sie im Zusammenhang mit Fig. 1 erläutert worden ist.

In einem ersten Schritt M1 erfolgt zunächst ein Erzeugen einer bildlichen Darstellung eines Ziels bzw. Zielgebietes für ein Waffensystem. In einem Schritt M2 erfolgt ein Auswählen eines Waffensystems auf der Basis eines oder mehrerer Waffensystemparameter, die bekannte, geschätzte und/oder vorausberechnete Eigenschaften des ausgewählten Waffensystems angeben.

Danach können in einem Schritt M3 graphische Symbolelemente der Waffensystemparameter des ausgewählten Waffensystems erzeugt werden, die in einem Schritt M4 über die bildliche Darstellung des Ziels bzw. Zielgebietes überlagert werden kann. In einem Schritt M5 kann ein Nutzer Werte eines oder mehrerer der Waffensystemparameter ändern, beispielsweise gemäß vorab in einer Datenbank gespeicherter Parametereinstellungen für einen gewählten Waffensystemtyp. In einem Schritt M6 kann daraufhin ein Modifizieren der graphischen Symbolelemente auf der Basis der geänderten Werte eines oder mehrerer der Waffensystemparameter erfolgen, so dass in einem Schritt M7 ein Modifizieren der Überlagerung der graphischen Symbolelemente über die bildliche Darstellung des Ziels bzw. Zielgebietes möglich wird.

Die Waffensystemparameter können zum Beispiel Gefechtskopftyp, Waffensystemreichweite, verfügbare Sensorik, Einsatzhöhen-Bänder, Gefechtskopfskalierung, Munitionszündzeitpunkt, Munitionswirkbereich, Flugkörperanflugwinkel, Flugkörperanfluggeschwindigkeit, Flugkörperauftreffgeschwindigkeit am Ziel, und/oder Munitionswirkpattern umfassen. Die graphischen Symbolelemente können computergestützt erzeugte Elemente wie Linien, Kreise, Pfeile oder Buchstaben aufweisen. Die bildliche Darstellung kann durch einen Nutzer in Zoom, Ansichtswinkel, Ansichtsrichtung und/oder Positionierung des Ansichtsausschnitts durch einen Nutzer verändert werden.

Die bildliche Darstellung kann eine Photographie, ein Aufklärungsbild, ein Satellitenfoto, eine Wärmebildkameraaufnahme, eine Aufnahme eines Nachtsichtgerätes oder ein Ausschnitt kartographischen Bildmaterials umfassen und kann zweidimensional oder dreidimensional in perspektivischer Ansicht oder Draufsicht angezeigt werden.

Das Verfahren M kann bei Verfahren zur strategischen oder taktischen Missionsplanung eingesetzt werden, um zu einer kombinierten Darstellung einer bildlichen Darstellung und graphischer Symbolelemente zu gelangen. Diese kombinierte Darstellung kann einen Missionsplaner durch eine verbesserte Visualisierung der Missionsrandbedingungen bei der Waffensystemauswahl unterstützen.

Fig. 3 zeigt eine schematische Illustration eines nicht-flüchtigen, computerlesbaren Speichermediums 20, auf welchem computerausführbare Anweisungen gespeichert sind, die bei Ausführung mittels einer datenverarbeitenden Vorrichtung die datenverarbeitende Vorrichtung dazu veranlassen, die Schritte des im Zusammenhang mit Fig. 2 erläuterten Verfahrens M auszuführen. Das Speichermedium 20 kann beispielsweise eine SD-Karte, ein USB-Flashspeicher, eine Diskette, eine CD, eine DVD oder ein ähnliches geeignetes Medium aufweisen.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen, Modifikationen und Äquivalente der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

### LISTE DER BEZUGSZEICHEN

- 1: Zielanzeige
- 2: Auswahlbereich
- 3: Auswahlbereich
- 4: Auswahlregler
- 5: Darstellungsmodifikator
- 6: Darstellungsmodifikatoren
- 10: Anzeigeeinrichtung
- 20: Speichermedium
- M: Verfahren
- M1: Verfahrensschritt
- M2: Verfahrensschritt
- M3: Verfahrensschritt
- M4: Verfahrensschritt
- M5: Verfahrensschritt
- M6: Verfahrensschritt
- M7: Verfahrensschritt

## Patentansprüche

1. Verfahren (M) zur Waffensystemauswahl, umfassend:
Erzeugen (M1) einer bildlichen Darstellung eines Ziels bzw. Zielgebietes für ein Waffensystem;
Auswählen (M2) eines Waffensystems auf der Basis eines oder mehrerer Waffensystemparameter, die bekannte, geschätzten und/oder vorausberechneten Eigenschaften des ausgewählten Waffensystems angeben; Erzeugen (M3) graphischer Symbolelemente der Waffensystemparameter des ausgewählten Waffensystems;
Überlagern (M4) der graphischen Symbolelemente über die bildliche Darstellung des Ziels bzw. Zielgebietes;
Ändern (M5) von Werten eines oder mehrerer der Waffensystemparameter durch einen Nutzer;
Modifizieren (M6) der graphischen Symbolelemente auf der Basis der geänderten Werten eines oder mehrerer der Waffensystemparameter; und
Modifizieren (M7) der Überlagerung der graphischen Symbolelemente über die bildliche Darstellung des Ziels bzw. Zielgebietes.

2. Verfahren (M) gemäß Anspruch 1, wobei die Waffensystemparameter Gefechtskopftyp, Waffensystemreichweite, verfügbare Sensorik, Einsatzhöhen-Bänder, Gefechtskopfskalierung, Munitionszündzeitpunkt, Munitionswirkbereich, Flugkörperanflugwinkel, Flugkörperanfluggeschwindigkeit, Flugkörperauftreffgeschwindigkeit am Ziel, und/oder Munitionswirkpattern umfassen.

3. Verfahren (M) gemäß einem der Ansprüche 1 und 2, wobei die graphischen Symbolelemente computergestützt erzeugte Elemente wie Linien, Kreise, Pfeile oder Buchstaben aufweisen.

4. Verfahren (M) gemäß einem der Ansprüche 1 bis 3, wobei die bildliche Darstellung in Zoom, Ansichtswinkel, Ansichtsrichtung und/oder Positionierung des Ansichtsausschnitts durch einen Nutzer verändert werden kann.

5. Verfahren (M) gemäß einem der Ansprüche 1 bis 4, wobei das Ändern (M5) von Werten eines oder mehrerer der Waffensystemparameter durch einen Nutzer gemäß vorab in einer Datenbank gespeicherten Parametereinstellungen für einen gewählten Waffensystemtyp erfolgt.

6. Verfahren (M) gemäß einem der Ansprüche 1 bis 5, wobei die bildliche Darstellung eine Photographie, ein Aufklärungsbild, ein Satellitenfoto, eine Wärmebildkameraaufnahme, eine Aufnahme eines Nachtsichtgerätes oder ein Ausschnitt kartographischen Bildmaterials umfasst.

7. Verfahren (M) gemäß Anspruch 6, wobei die bildliche Darstellung ein zweidimensionales Bild oder ein dreidimensionales Bild in perspektivischer Ansicht oder Draufsicht umfasst.

8. Verfahren zur strategischen oder taktischen Missionsplanung, bei welchem ein Verfahren (M) gemäß einem der Ansprüche 1 bis 7 zur kombinierten Darstellung einer bildlichen Darstellung und graphischer Symbolelemente eingesetzt wird, um einen Missionsplaner bei der Waffensystemauswahl zu unterstützen.

9. System zur Waffensystemauswahl, mit:
einer Anzeigeeinrichtung (10), welche dazu ausgelegt ist, eine Zielanzeige (1) mit der bildlichen Darstellung eines Ziels bzw. Zielgebietes für ein Waffensystem, welches auf der Basis eines oder mehrerer Waffensystemparameter, die bekannte, geschätzten und/oder vorausberechneten Eigenschaften des ausgewählten Waffensystems angeben, darzustellen; und
einer Recheneinrichtung, welche dazu ausgelegt ist, graphische Symbolelemente der Waffensystemparameter eines ausgewählten Waffensystems zu erzeugen, die graphischen Symbolelemente über die bildliche Darstellung des Ziels bzw. Zielgebietes zu überlagern, und auf der Basis von Nutzereingaben zur Änderung von Werten eines oder mehrerer der Waffensystemparameter die graphischen Symbolelemente auf der Basis der geänderten Werten eines oder mehrerer der Waffensystemparameter und deren Überlagerung über die bildliche Darstellung des Ziels bzw. Zielgebietes zu modifizieren.

10. System gemäß Anspruch 9, wobei die Waffensystemparameter Gefechtskopftyp, Waffensystemreichweite, verfügbare Sensorik, Einsatzhöhen-Bänder, Gefechtskopfskalierung, Munitionszündzeitpunkt, Munitionswirkbereich, Flugkörperanflugwinkel, Flugkörperanfluggeschwindigkeit, Flugkörperauftreffgeschwindigkeit am Ziel, und/oder Munitionswirkpattern umfassen.

11. System gemäß einem der Ansprüche 9 und 10, wobei die graphischen Symbolelemente computergestützt erzeugte Elemente wie Linien, Kreise, Pfeile oder Buchstaben aufweisen.

12. System gemäß einem der Ansprüche 9 bis 11, wobei die bildliche Darstellung in Zoom, Ansichtswinkel, Ansichtsrichtung und/oder Positionierung des Ansichtsausschnitts durch einen Nutzer verändert werden kann.

13. System gemäß einem der Ansprüche 9 bis 12, wobei die bildliche Darstellung eine Photographie, ein Aufklärungsbild, ein Satellitenfoto, eine Wärmebildkameraaufnahme, eine Aufnahme eines Nachtsichtgerätes oder ein Ausschnitt kartographischen Bildmaterials umfasst.

14. System gemäß Anspruch 13, wobei die bildliche Darstellung ein zweidimensionales Bild oder ein dreidimensionales Bild in perspektivischer Ansicht oder Draufsicht umfasst.

15. Nicht-flüchtiges computerlesbares Speichermedium (20), auf welchem computerausführbare Anweisungen gespeichert sind, die bei Ausführung mittels einer datenverarbeitenden Vorrichtung die datenverarbeitende Vorrichtung dazu veranlassen, die Schritte eines Verfahrens (M) gemäß den Ansprüchen 1 bis 8 auszuführen.
